## Europäisches Patentamt

## European Patent Office

## Office européen des brevets

(19)

(11) Veröffentlichungsnummer: **0 087 793**
A1

# EUROPÄISCHE PATENTANMELDUNG

(12)

(21) Anmeldenummer: 83101924.5

(22) Anmeldetag: 28.02.83

(51) Int. Cl.³: **C 03 C 23/00**
C 03 C 19/00, B 23 K 26/00
B 24 B 9/08

(30) Priorität: 01.03.82 DE 3207274

(43) Veröffentlichungstag der Anmeldung:
07.09.83 Patentblatt 83/36

(84) Benannte Vertragsstaaten:
AT BE CH DE FR GB IT LI LU NL SE

(71) Anmelder: Achthal-Maschinenbau GmbH
Rudolf-Diesel-Strasse 17-19 Postfach 140
D-8012 Ottobrunn(DE)

(72) Erfinder: Eschenbacher, Wolfgang Günther
Rudolf-Diesel-Strasse 19
D-8012 Hohenbrunn-Riemerling(DE)

(74) Vertreter: Sandmann, Joachim, Dr.
Hirtenstrasse 19
D-8012 Ottobrunn(DE)

(54) Verfahren zum Polieren von vorgeschliffenen Oberflächen an Werkstücken aus Glas.

(57) Zum Polieren der Oberfläche eines Werkstücks aus Glas wird das Werkstück vorgewärmt, worauf die zu polierende Oberfläche des vorgewärmten Werkstücks an einem $CO_2$-Laser vorbeigeführt und dadurch kurzzeitig bestrahlt wird.

EP 0 087 793 A1

BESCHREIBUNG:

Die Erfindung betrifft ein Verfahren zum Polieren von vorgeschliffenen Oberflächen an Werkstücken aus Glas.

Es ist bekannt, Glasoberflächen im Wege des Säurepolierens zu
glätten. Dieses Verfahren ist jedoch wegen der damit verbundenen Umweltbelastung bzw. der kostspieligen Beseitigung der
Rückstände von Nachteil.

Es ist auch bekannt, Glasoberflächen mechanisch zu polieren.
Dieses Verfahren ist jedoch mit einem besonders hohen Arbeitsaufwand verbunden.

Schließlich ist auch bekannt, daß an Werkstücken aus Glas
Material abtragende oder verformende Bearbeitungsvorgänge wie
Schweißen, Trennen, Bohren oder Gravieren durch Laserbestrahlung vorgenommen werden können. Dabei werden die Laserstrahlen
zur Einwirkung auf Werkstücke aus Glas gebracht, die sich auf
Umgebungstemperatur befinden. Auf diese Weise werden gute Ergebnisse erzielt, wenn wie beim Gravieren die örtlich aufgebrachte Laserenergie zum Abtragen von Material durch dessen
Verdampfung verwendet wird.

Nach den Erkenntnissen der Erfindung können Glasoberflächen
auch mittels Laserstrahlen auf einfache Weise poliert werden,
wenn durch die Kurzzeitigkeit der Bestrahlung in Verbindung
mit der aufgebrachten Energiedichte und der Verteilung der
aufgebrachten Energie im Werkstück örtliche Überhitzungen
ausgeschaltet werden. Hierbei hat sich eine Vorwärmung der
Werkstücke vor dem Bestrahlen als erforderlich erwiesen, um
ein Springen des Werkstücks wegen hoher plötzlicher Erwärmung
beim Bestrahlen zu vermeiden.

.<span>/</span>.

Dementsprechend kann der Erfindung die Aufgabe zugeordnet werden, ein mit geringem Arbeitsaufwand und ohne Umweltauflagen durchzuführendes Verfahren zum Polieren von Glasoberflächen zu schaffen, das in technischem Maßstab durchführbar ist und sich als leistungsfähig und wirtschaftlich erweist.

Diese Aufgabe wird erfindungsgemäß dadurch gelöst, daß die Werkstücke vorgewärmt und in vorgewärmtem Zustand mit Laserstrahlen bestrahlt werden.

Die Vorwärmung kann bis nahe dem Transformationspunkt des Glases erfolgen. Insbesondere bei dicken oder dickwandigen Werkstücken aus Glas reicht jedoch auch eine weniger starke Vorwärmung aus, um die gewünschte Oberflächenglättung zu erzielen und ein Springen der Werkstücke zu vermeiden.

Es hat sich gezeigt, daß im allgemeinen die gewünschte Oberflächenglättung bereits durch ein einmaliges Vorbeiführen der zu polierenden Oberfläche an den Laserstrahlen erreicht werden kann, was auch im Interesse einer hohen Leistung des Verfahrens liegt. Ggf. ist es aber auch möglich, die zu polierenden Oberflächen zweimal oder noch öfter an den Laserstrahlen vorbeizuführen. Mit diesen Maßnahmen lassen sich die Temperaturverhältnisse im Werkstück beeinflussen und je nach Anwendungsfall während des Polierens schädliche Temperaturspitzen im Werkstück vermeiden.

Es hat sich als zweckmäßig herausgestellt, zum Bestrahlen der vorgeschliffenen Oberflächen einen $CO_2$-Laser zu verwenden.

Das erfindungsgemäße Verfahren kann überall dort mit Erfolg eingesetzt werden, wo glatte bzw. polierte Glasoberflächen erwünscht sind. Ein Anwendungsgebiet sind Ziergläser.

Die Erfindung soll durch das nachfolgende Beispiel erläutert werden:

Ein Kognak-Schwenker mit unpoliertem Schliffmuster wurde von Zimmertemperatur auf ein Temperatur von etwa 350°C in einem Wärmeofen erwärmt. Auf dem Kognak-Schwenker waren verschiedene Schliffarten (Carborundum- und Diamantschliffe). Der Kognak-Schwenker wurde mit einer Umfangsgeschwindigkeit von etwa 15 cm/min gedreht und dabei mit einem $CO_2$-Laserstrahl mit einer Leistung von 90 Watt bestrahlt. Die Bestrahlung wurde während zweier Umdrehungen des Glases durchgeführt. Hierbei wurde eine optisch sehr gute Polierwirkung erzielt.

**Patentanwalt Dr. jur. J. SANDMANN, Diplom-Ingenieur** 0087793

Hirtenstraße 19 · 8012 Ottobrunn · Telefon (089) 6013894

Amtl. Aktenzeichen: Neuanmeldung                    Mein Zeichen: 2363

Anmelder(in):   Achthal-Maschinenbau GmbH,

4

Verfahren zum Polieren von vorgeschliffenen
Oberflächen an Werkstücken aus Glas
=========================================

PATENTANSPRÜCHE:

1. Verfahren zum Polieren von vorgeschliffenen Oberflächen
   an Werkstücken aus Glas, dadurch g e k e n n z e i c h -
   n e t , daß die Werkstücke vorgewärmt und in vorgewärmtem
   Zustand mit Laserstrahlen bestrahlt werden.

2. Verfahren nach Anspruch 1, dadurch g e k e n n z e i c h -
   n e t , daß die Werkstücke auf eine Temperatur nahe dem
   Transformationspunkt vorgewärmt werden.

3. Verfahren nach Anspruch 1 oder 2, dadurch g e k e n n -
   z e i c h n e t , daß die Werkstücke mit ihrer zu polierenden Oberfläche  einmal oder mehrmals an den Laserstrahlen vorbeigeführt werden.

4. Verfahren nach einem der Ansprüche 1 bis 3, dadurch
   g e k e n n z e i c h n e t , daß die Werkstücke mit
   einem $CO_2$-Laser bestrahlt werden.

# EUROPÄISCHER RECHERCHENBERICHT

## EINSCHLÄGIGE DOKUMENTE

EP 83101924.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB - A - 2 078 621 (VÝSKUMNÝ A VÝVOJOVÝ USTAV SKLARSKÝ) <br> * Seite 1, Zeilen 1-36; Seite 3, Zeilen 103-119 * <br> & DE-A1-3 121 138 | 1,4 | C 03 C 23/00 <br> C 03 C 19/00 <br> B 23 K 26/00 <br> B 24 B 9/08 |
| A | DE - B - 1 936 309 (JENAER GLAS-WERK SCHOTT & GEN) <br> * Gesamt * | 1-3 | |
| A | DE - A1 -2 523 401 (CORNING GLASS WORKS) <br> * Fig. 6; Seite 14, Zeilen 22-24; Seite 15, Zeile 1 * | 1 | |

### RECHERCHIERTE SACHGEBIETE (Int. Cl. ³)

C 03 C

B 24 B

B 24 C

B 23 K

B 44 C

C 03 B

Der vorliegende Recherchenbericht wurde für alle Patentansprüche erstellt.

| Recherchenort | Abschlußdatum der Recherche | Prüfer |
|---|---|---|
| WIEN | 08-06-1983 | HAUSWIRTH |